# FASCICULE DE BREVET EUROPEEN

(11) **EP 3 121 071 B1**
(45) Date de publication et mention de la délivrance du brevet: **30.01.2019**
(21) Numéro de dépôt: 16180476.0
(22) Date de dépôt: 21.07.2016
(51) Int. Cl.: B60S 1/08, B60S 1/52, B60S 1/56, G02B 27/00, B62D 27/02

(54) **DISPOSITIF DE NETTOYAGE D'UN CAPTEUR POUR VEHICULE AUTOMOBILE**
REINIGUNGSVORRICHTUNG EINES SENSORS FÜR KRAFTFAHRZEUG
DEVICE FOR CLEANING A SENSOR FOR A MOTOR VEHICLE

(30) Priorité: 22.07.2015 FR 1556960
(43) Date de publication de la demande: 25.01.2017
(73) Titulaire: Valeo Systèmes d'Essuyage, 78322 Le Mesnil Saint Denis (FR)
(72) Inventeur: TREBOUET, Marcel, 78450 CHAVENAY (FR); GRASSO, Giuseppe, 63340 Le Breuil sur Couze (FR)
(74) Mandataire: Callu-Danseux, Violaine

(56) Documents cités:
- US-A1- 2013 048 036
- US-A1- 2015 138 357
- US-A1- 2015 151 722

## Description

La présente invention se rapporte au domaine des dispositifs d'aide à la conduite et, plus particulièrement, au domaine des capteurs utilisés à cette fin, tels que des moyens de prise de vue, en particulier des caméras, ou des moyens de détection par ondes électromagnétiques, en particulier des radars ou des lidars. Dans ce domaine, l'invention vise plus particulièrement les dispositifs de nettoyage de tels capteurs.

Le document US 2013/0048036 A1 décrit un dispositif de nettoyage selon le préambule de la revendication 1.

Des capteurs équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les images fournies par les moyens prises de vue, ou les données transmises par les radars par exemple, doivent être de la meilleure qualité possible et il est donc indispensable de disposer de faces de ces capteurs, tournées vers l'extérieur du véhicule, qui soient propres. Pour ce faire, un dispositif de nettoyage du capteur peut être associé à ce capteur, et commandé pour injecter, sur ledit capteur, un flux de fluide nettoyant juste avant que soit réalisée la détection. Il est intéressant de commander le dispositif pour déterminer la durée et le commencement de la séquence de nettoyage, et pour pouvoir escamoter le dispositif de nettoyage après usage, afin qu'ils ne gênent pas la détection lorsque les capteurs sont en fonctionnement, et afin qu'ils soient protégés des chocs par exemple. En outre, ils doivent être le plus compacts possibles pour répondre aux contraintes d'encombrement du véhicule. Par ailleurs, il est recherché que de tels dispositifs permettent l'injection de différents fluides, gazeux ou liquides. En effet, dans le cas où un liquide de nettoyage est projeté sur le capteur, et par exemple la lentille d'une caméra de prise de vue, pour en chasser les salissures, il est intéressant de sécher rapidement cette lentille afin d'éviter tout risque de pollution de l'image par d'éventuelles traces qu'un tel liquide pourrait laisser (gouttes, coulures, etc ...).

La présente invention a pour but d'optimiser un tel dispositif de nettoyage, tant dans ses performances de nettoyage que dans son encombrement.

Dans ce but, l'invention a pour objet un dispositif de nettoyage d'un capteur d'un véhicule automobile, qui comprend des moyens de distribution simultanée ou séquentielle, par un orifice de distribution agencé dans une buse de distribution, d'un premier fluide et d'un deuxième fluide acheminés séparément, respectivement, par un premier canal d'admission et par un deuxième canal d'admission jusqu'à la buse de distribution. Le dispositif selon l'invention comprend également des moyens de déplacement de la buse de distribution entre une position de repos et une position déployée, notamment un déplacement en translation, et notamment le long d'un axe parallèle à la direction d'allongement des premier et deuxième canaux de distribution. Et il est notable que ces moyens de déplacement de la buse de distribution comprennent des moyens communs avec les moyens d'alimentation en premier fluide du premier canal d'admission.

Notamment, ces moyens communs peuvent comporter au moins un piston, rendu mobile en déplacement par la pression exercée par le premier fluide, et dont la tige associée présente une extrémité reliée à la buse de distribution.

De façon plus détaillée, on peut prévoir que les moyens d'alimentation en premier fluide du premier canal d'admission comprennent une chambre d'alimentation dans laquelle est apte à coulisser de manière étanche un piston dont une extrémité d'une tige est, selon l'invention, solidaire d'une glissière elle-même solidairement liée à la buse de distribution. Il en résulte que tout déplacement du piston génère un déplacement de la glissière, qui entraîne à son tour un déplacement de la buse de distribution.

On pourra prévoir que les premier et deuxième canaux d'admission sont solidaires en déplacement de la buse de distribution, de telle manière que les moyens de déplacement de la buse entrainent en déplacement l'ensemble formé par le premier canal d'admission, le deuxième canal d'admission, et la buse de distribution.

Selon une série de caractéristiques de l'invention, prises seules ou en combinaison, on peut prévoir que le premier canal d'admission et le deuxième canal d'admission sont parallèles entre eux, et la buse de distribution s'étend, dans le prolongement de ces premier et deuxième canaux d'admission, selon la même direction que ces derniers. On peut prévoir également que le premier canal d'admission et le deuxième canal d'admission communiquent entre eux par l'intermédiaire d'une chambre commune de distribution dans laquelle ils débouchent respectivement, notamment en un premier orifice d'acheminement et en un deuxième orifice d'acheminement. Avantageusement, le premier canal d'admission et le deuxième canal d'admission sont respectivement munis, à leur extrémité par laquelle, respectivement, les premier et deuxième fluides sont admis en leur sein, d'une première valve anti-retour et d'une deuxième valve anti-retour.

On peut prévoir que le dispositif comporte deux entrées de fluide distinctes pour l'alimentation en premier fluide du premier canal d'admission et l'alimentation en deuxième fluide du deuxième canal d'admission, l'alimentation en premier fluide du premier canal d'admission étant reliée à la chambre d'alimentation.

Selon une autre caractéristique de l'invention, les moyens d'alimentation en premier fluide du premier canal d'admission comprennent en outre un embout d'alimentation débouchant dans la chambre d'alimentation, ainsi qu'un orifice d'écoulement ménagé dans une paroi de ladite chambre d'alimentation, par lequel le premier fluide peut, dans certaines conditions qui seront détaillées plus loin, être acheminé, notamment par le biais d'une canule souple d'alimentation, jusqu'au premier canal d'admission. Avantageusement, cet orifice d'écoulement est placé de telle manière qu'il débouche alternativement, d'une part, dans un volume aval de la chambre d'alimentation, dans lequel est admis le premier fluide par l'embout d'alimentation, et, d'autre part, dans un volume amont de ladite chambre d'alimentation, exempt de premier fluide, en fonction de la position d'un plateau du piston lors du déplacement étanche dudit piston au sein de ladite chambre d'alimentation. En d'autres termes, dans la course du piston au sein de la chambre d'alimentation, ce dernier délimite, par un plateau qu'il comporte, un volume amont et un volume aval dans cette dernière. Plus précisément, le volume aval est le volume qui accueille le premier fluide, admis dans la chambre d'alimentation par l'embout d'alimentation, et le volume amont est le volume complémentaire défini par le plateau du piston dans la chambre d'alimentation. Les dimensions respectives du volume amont et du volume aval varient donc durant le déplacement étanche du piston au sein de la chambre d'alimentation, en fonction de la position du plateau dudit piston, ce qui conduit l'orifice d'écoulement à déboucher alternativement dans l'un ou l'autre de ces volumes en fonction de la position du plateau du piston au sein de la chambre d'alimentation.

Selon l'invention, les courses du piston et, donc, de la glissière solidaire de ce dernier et de la buse de distribution solidaire de celle-ci sont définies pour que la buse de distribution soit dans sa position déployée lorsque l'orifice d'écoulement débouche dans le volume aval de la chambre d'alimentation, et pour que la buse de distribution soit dans sa position de repos lorsque l'orifice d'écoulement débouche dans le volume amont de la chambre d'alimentation. Avantageusement, un moyen de rappel en position, et notamment un ressort placé entre le piston et la glissière, est utilisé pour ramener la buse de distribution dans sa position de repos.

D'autres caractéristiques, détails et avantages de l'invention, ainsi que le fonctionnement du dispositif selon l'invention, ressortiront plus clairement à la lecture de la description donnée ci-après à titre indicatif en relation avec des dessins dans lesquels :
- la figure 1 est une vue générale, en perspective, d'un dispositif selon l'invention, dans une première position,
- la figure 2 est une vue, dans une perspective semblable, du dispositif de la figure 1, dans une deuxième position,
- la figure 3 est une vue en perspective du dispositif de l'invention dans la deuxième position illustrée sur la figure 2, sous un angle différent,
- la figure 4 est une vue schématique en coupe d'une partie du dispositif selon l'invention,
- et les figures 5 et 6 sont des vues en perspective d'un dispositif selon l'invention et du capteur à nettoyer, selon une position de repos (figure 5) et une position de travail (figure 6).

Il faut tout d'abord noter que les figures exposent l'invention de manière détaillée pour mettre en oeuvre cette dernière, mais que lesdites figures peuvent bien entendu servir à mieux définir l'invention le cas échéant.

Dans la description qui suit, les dénominations "amont" et "aval" se réfèrent à la direction d'écoulement des fluides dans le dispositif de nettoyage selon l'invention et dans les éléments qui le composent. Ainsi, la dénomination "amont" se réfère au côté du dispositif ou d'un élément de celui-ci par lequel le ou les fluides sont admis, et la dénomination "aval" se réfère au côté du dispositif selon l'invention ou d'un des éléments qui le composent par lequel le ou les fluides sont distribués à l'extérieur du dispositif selon l'invention ou vers un autre élément de celui-ci. Il est à noter que, en fonction de la configuration des différents éléments qui composent le dispositif selon l'invention, un même élément peut être, dans le même temps, en "aval" ou en "amont" d'autres éléments du dispositif selon l'invention. Il est également à noter que, dans ce qui suit, la dénomination générique "fluide" désigne indifféremment, sans que cela modifie la nature et/ou la portée de l'invention, soit un fluide unique, gazeux ou liquide, soit un mélange de fluides, gazeux et/ou liquides.

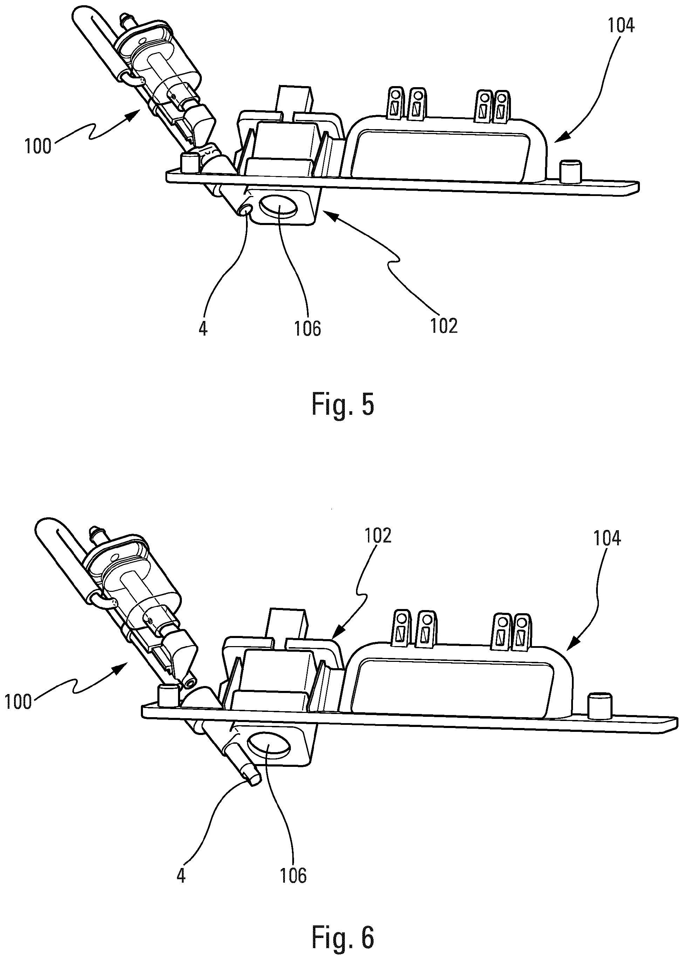

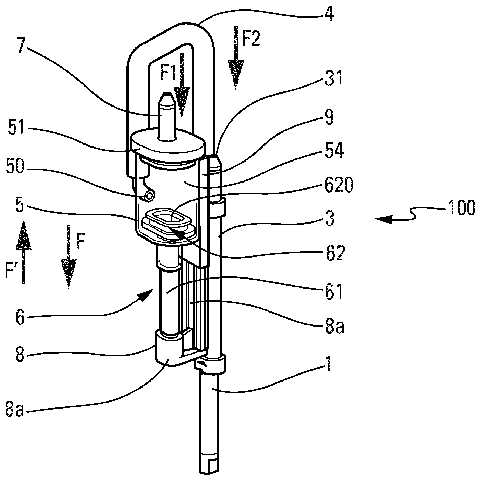

En référence aux figures 5 et 6, un dispositif de nettoyage 100 est disposé au voisinage d'un capteur 102, fixé sur un support 104 formant partie ou rapporté sur un élément de carrosserie d'un véhicule automobile. Le dispositif de nettoyage est ici agencé dans une disposition inclinée par rapport au plan du support, de manière à ce que son extrémité libre, porteuse d'une buse d'injection 4, lorsqu'elle est déployée (figure 6), est en regard de la face à nettoyer 106 du capteur, tournée vers l'extérieur du véhicule, et qu'elle est en retrait de cette face à nettoyer 106 lorsqu'elle est escamotée (figure 5).

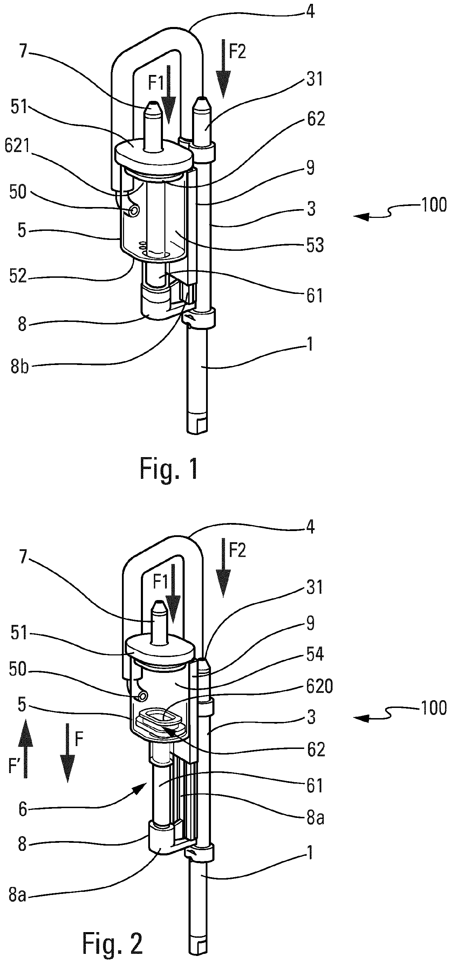

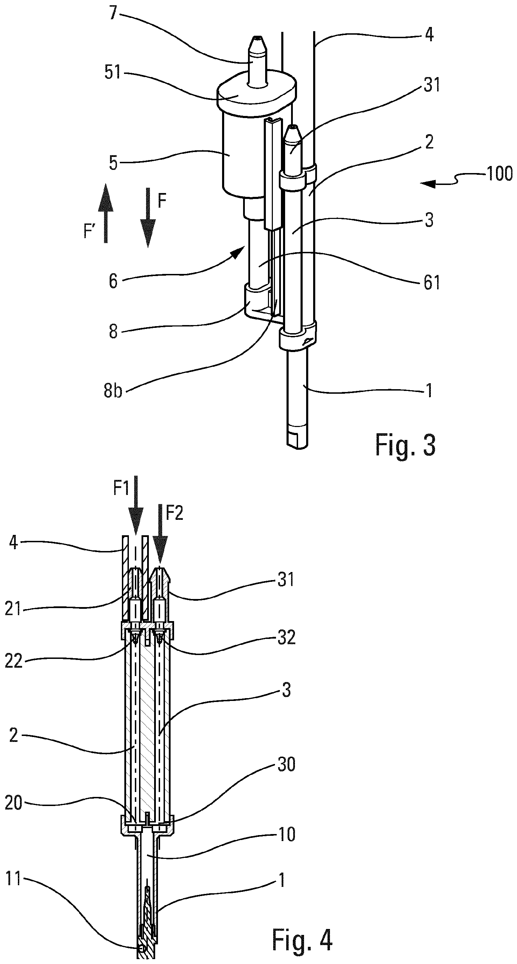

En référence aux figures 1 à 4, un dispositif selon l'invention comporte une buse unique de distribution 1, qui communique, en amont, avec un premier canal 2 et avec un deuxième canal 3 d'admission de fluide, avantageusement parallèles entre eux. Le premier canal 2 et le deuxième canal 3 sont plus précisément représentés sur la figure 4. Ces deux canaux débouchent par deux orifices d'acheminement distincts, respectivement 20 pour le premier canal 2 et 30 pour le deuxième canal 3, dans une chambre de distribution commune 10 ménagée au sein de la buse de distribution 1. Avantageusement, la buse de distribution 1 est agencée pour que la chambre commune de distribution 10 communique, par un canal de distribution non représenté sur les figures, avec un orifice de distribution 11 schématiquement représenté sur la Figure 4. Avantageusement également, la buse de distribution 1 est sensiblement placée dans le prolongement des premier et deuxième canaux 2 et 3, selon la direction d'allongement commune à ces derniers. Selon le mode de réalisation préféré de l'invention illustré par les figures, le premier canal d'admission 2 et le deuxième canal d'admission 3, qui débouchent chacun dans la chambre commune de distribution 10, communiquent librement entre eux via celle-ci. Il s'ensuit qu'un fluide admis dans l'un quelconque de ces canaux d'admission pourra librement se propager dans l'autre canal d'admission, via la chambre de distribution commune 10.

Selon l'invention, l'un des canaux d'admission (ici le premier canal d'admission 2, selon le mode de réalisation représenté par les figures), est équipé, à son extrémité amont, d'un premier embout d'admission 21 par lequel il communique avec un ensemble spécifique d'alimentation en fluide qui comporte, en particulier, une canule d'alimentation 4, une chambre d'alimentation 5, un piston 6 et un embout d'alimentation 7. Ces différents éléments et leurs rôles respectifs vont maintenant être décrits. Avantageusement, une valve anti-retour 22, visible sur la Figure 4, est placée à l'amont du premier canal d'admission 2, entre celui-ci et le premier embout d'admission 21.

Selon un mode de réalisation préféré de l'invention, la canule d'alimentation 4 se présente sous forme d'un tube réalisé dans un matériau plastique avantageusement souple, et sa forme et ses dimensions sont avantageusement définies pour optimiser l'encombrement de l'ensemble du dispositif selon l'invention. A son extrémité aval, la canule d'alimentation 4 est reliée au premier canal d'admission 2 en étant reçue autour du premier embout d'admission 21, porté par l'extrémité amont du premier canal d'admission 2. La canule d'alimentation 4 forme ainsi, à son extrémité aval, un manchon autour du premier embout d'admission 21. Avantageusement, le diamètre intérieur de la canule d'alimentation 4 est défini de telle manière que, une fois en place sur le premier embout d'admission 21, cette canule d'alimentation permet d'acheminer un fluide dans le premier canal d'admission 2 sans que se produise de fuite de ce fluide au niveau de la jonction entre le premier embout d'admission 21 et ladite canule d'alimentation 4. A son extrémité amont, la canule d'alimentation 4 communique avec la chambre d'alimentation 5 par un orifice d'écoulement 50 percé dans une paroi latérale de ladite chambre d'alimentation. Avantageusement, la canule d'alimentation 4 comporte des moyens (non détaillés sur les figures) pour que, en sa zone de jonction avec l'orifice d'écoulement 50, le passage de fluide de la chambre d'alimentation 5 à la canule d'alimentation 4 se fasse sans fuite de celui-ci.

La chambre d'alimentation 5 s'étend en amont et en aval de l'orifice d'écoulement 50, et accueille en son sein le piston 6. Selon l'invention, le piston 6 comprend une tige 61 et un plateau 62, la tige 61 étant sensiblement placée en position centrale du plateau 62. Avantageusement, la forme et les dimensions extérieures du plateau 62 du piston 6 sont définies de telle manière que celui-ci puisse coulisser au sein de la chambre d'alimentation 5 de manière ajustée. Plus précisément, le plateau 62 présente une forme complémentaire d'une section intérieure de la chambre d'alimentation selon un plan sensiblement perpendiculaire à la direction de la tige 61, et les dimensions extérieures du plateau 62 sont très légèrement inférieures aux dimensions intérieures de la chambre d'alimentation 5 selon ledit plan de section. En d'autres termes, le piston 6 est apte à coulisser de manière étanche au sein de la chambre d'alimentation 5. Selon différents modes de réalisation de l'invention, des moyens complémentaires d'étanchéité (à titre d'exemple non limitatif, un ou plusieurs joints d'étanchéité) peuvent être disposés à la périphérie du plateau 62 du piston 6. Dans son coulissement au sein de la chambre d'alimentation 5, le piston 6 se déplace, selon la direction de sa tige 61, d'une paroi d'extrémité aval 51 à une paroi d'extrémité amont 52 de cette chambre d'alimentation 5. Avantageusement, les formes et dimensions des parois d'extrémités aval 51 et amont 52 de la chambre d'alimentation 5 sont similaires aux formes et dimensions du plateau 62 du piston 6.

Lorsque le piston 6 se déplace au sein de la chambre d'alimentation 5, il définit, au sein de celle-ci, un volume amont 53 et un volume aval 54, qui varient en fonction de la position du plateau 62 du piston 6 au sein de la chambre d'alimentation 5. Plus précisément, le volume aval 54 est délimité par les parois latérales de la chambre d'alimentation 5, une face aval 620 du plateau 62 du piston 6, et la paroi d'extrémité aval 51 de la chambre d'alimentation 5, et le volume amont 53 est délimité par les parois latérales de la chambre d'alimentation 5, la face amont, 621, opposée à la face aval 620, du plateau 62 du piston 6, et la paroi d'extrémité amont 52 de la chambre d'alimentation 5.

Selon l'invention, l'embout d'alimentation 7 est agencé sur la chambre d'alimentation 5 de telle manière qu'il débouche, au sein de ladite chambre d'alimentation 5, en un orifice d'alimentation 70 (non visible sur les figures) situé sur la paroi d'extrémité aval 51 de celle-ci. Selon l'invention également, lors du coulissement du piston 6 au sein de la chambre d'alimentation 5, l'orifice d'écoulement 50 débouche alternativement dans le volume aval 54 ou dans le volume amont 53 de cette chambre d'alimentation, selon la position du plateau 62 du piston 6 au sein de cette dernière.

Selon l'invention, et comme le montrent les figures, la tige 61 du piston 6 est agencée de telle manière qu'elle traverse la paroi d'extrémité amont 52 de la chambre d'alimentation 5. Avantageusement, des moyens appropriés sont agencés à la fois sur la tige du piston 6 et sur la paroi d'extrémité amont 52 de la chambre d'alimentation 5 pour que cette traversée soit étanche : à titre d'exemple non limitatif, un ensemble de joints toriques et de gorges complémentaires peut être agencé respectivement sur ces deux éléments pour permettre le coulissement étanche de la tige 61 du piston 6 au travers de la paroi d'extrémité amont 52 de la chambre d'alimentation 5. De plus, selon l'invention, la tige 61 du piston 6 comporte des moyens de solidarisation, en son extrémité amont, à une glissière 8 rendue solidaire d'au moins la buse de distribution 1, et ici d'un ensemble formé par cette buse de distribution et les premier 2 et deuxième 3 canaux d'admission. La glissière 8 se trouve donc simultanément solidaire, d'une part, des deux canaux d'admission 2, 3 et, par là, de la buse de distribution 1 et, d'autre part, du piston 6 coulissant au sein de la chambre d'alimentation 5. Il s'ensuit que tout déplacement du piston 6 au sein de la chambre d'alimentation 5 entraîne simultanément, via le déplacement de la glissière 8, un déplacement des deux canaux d'admission et de la buse de distribution 1. A cet effet, la glissière 8 comporte une portion de fixation 8a à l'extrémité de la tige 61 et un coulisseau 8b s'étendant longitudinalement, dans la direction de déplacement de la buse de distribution, ce coulisseau étant monté dans un rail de forme correspondante (et non visible sur les figures) agencé sur une plaque support 9 sur laquelle peut être rendue solidaire la chambre d'alimentation. Le coulisseau est solidaire d'au moins la buse de distribution, et ici des parois des canaux d'admission 2 et 3. On pourra notamment prévoir que la glissière et les canaux d'admission sont réalisés en un ensemble monobloc. Tel que cela sera détaillé ci-après, le déplacement du piston par l'alimentation du dispositif en un premier fluide, via le passage dans la chambre d'alimentation 5, génère le déplacement de la buse de distribution 1, de sorte que l'on peut dire que les moyens de déplacement de la buse de distribution comprennent des moyens communs avec les moyens d'alimentation en premier fluide du premier canal d'admission.

Avantageusement, la liaison entre le piston 6 et la glissière 8 comprend des moyens élastiques de rappel en position du piston, ces moyens pouvant par exemple consister en un ressort de rappel (non représenté sur les figures) placé entre la paroi d'extrémité aval 51 de la chambre d'alimentation 5 et le piston 6, de manière à rappeler le piston dans la position initiale dans laquelle le volume aval est le plus faible, ce qui correspond à la position de repos de la buse d'admission, escamotée pour ne pas être en saillie du dispositif.

Selon l'invention, l'autre canal d'admission (ici le deuxième canal d'admission 3, selon le mode de réalisation illustré par les figures) est directement relié à un deuxième dispositif d'alimentation en fluide, non représenté par les figures, par l'intermédiaire d'un deuxième embout d'admission 31. Avantageusement, une valve anti-retour 32 (visible sur la Figure 4) est placée à l'entrée du deuxième canal d'admission 3, à l'amont de ce dernier, entre celui-ci et le deuxième embout d'admission 31. On pourra prévoir que les valves anti-retour peuvent être de façon connue des billes, des clapets, des valves à battant ou double battants, ou d'autres types de valves connues. Il va de soi que, de même que la canule d'alimentation 4 est avantageusement réalisée dans un matériau souple, le dispositif d'alimentation en fluide du deuxième canal d'admission 3 sera avantageusement, en sa liaison avec le deuxième embout d'admission 31, réalisé dans un matériau également souple, de manière à pouvoir, comme la canule d'alimentation 4 avec le premier canal d'admission 2, accompagner tout déplacement du deuxième canal d'admission 3 sans générer de fuite de fluide.

Un premier mode de fonctionnement du dispositif selon l'invention, tel qu'il vient d'être décrit et tel qu'il est illustré par les figures, est le suivant.

Dans une position initiale, illustrée plus particulièrement par la figure 1, le plateau 62 du piston 6 est sensiblement placé contre la paroi d'extrémité aval 51 de la chambre d'alimentation 5. Dans cette position, l'orifice d'écoulement 50 se trouve dans le volume amont 63 de la chambre d'alimentation 5, défini plus haut. Lorsqu'un premier fluide est admis dans la chambre d'alimentation 5 par l'embout d'alimentation 7 selon la direction représentée par la flèche F1 sur les figures, la pression exercée par ce premier fluide sur la face aval 620 du plateau 62 du piston 6 conduit celui-ci à se déplacer au sein de la chambre d'alimentation 5, vers l'amont de celle-ci, selon la direction représentée par la flèche F sur la figure 2. Dans ce déplacement, le volume aval 54, défini par la course du piston 6 dans ladite chambre d'alimentation 5, augmente, jusqu'à inclure l'orifice d'écoulement 50, comme le montre la figure 2. Le dispositif selon l'invention se trouve alors dans une deuxième position, dans laquelle le premier fluide, admis dans le volume aval 54 de la chambre d'alimentation 5, peut s'écouler à l'extérieur de cette dernière, dans la canule d'alimentation 4, via l'orifice d'écoulement 50, alimentant ainsi le premier canal d'admission 2 et, par là, la chambre commune de distribution 10 et l'orifice de distribution 11 de la buse de distribution 1.

Il est à noter que le déplacement du piston 6 induit, par l'intermédiaire de la glissière 8, un déplacement des canaux d'admission 2, 3 et de la buse de distribution 1, dans la même direction que celle illustrée par la flèche F sur la Figure 2, conduisant ladite buse de distribution 1 à prendre une position "déployée" par rapport à sa position initiale illustrée par la Figure 1. Avantageusement, le ressort de rappel, placé entre le piston 6 et la glissière 8, est choisi et agencé de telle manière qu'il est comprimé lorsque la buse de distribution 1 est dans cette position déployée.

Plusieurs situations de fonctionnement peuvent alors se produire. Dans une première situation de fonctionnement du dispositif selon l'invention, l'admission du premier fluide par l'embout d'alimentation 7 est poursuivie, et un deuxième fluide est admis, selon la direction illustrée par la flèche F2 sur les figures, dans le deuxième canal d'admission 3, de telle manière que les pressions respectives d'admission du premier et du deuxième fluides soient telles que le deuxième fluide se mélange au premier fluide au sein de la chambre commune de distribution 10. Le dispositif selon l'invention délivre alors de manière continue un mélange du premier et du deuxième fluides via l'orifice de distribution 11.

Dans une deuxième situation de fonctionnement, l'admission du premier fluide par l'embout d'alimentation 7 est stoppée lorsqu'une quantité prédéfinie de ce premier fluide a été admise. Sous l'effet, d'une part, du ressort de rappel 9 et, d'autre part, de l'arrêt de l'alimentation en premier fluide par l'embout d'alimentation 7, le piston 6 est alors ramené vers sa position initiale et est donc conduit à se déplacer vers l'aval de la chambre d'alimentation 5, selon la direction illustrée par la flèche F' sur la Figure 2. Dans ce déplacement, le plateau 62 du piston 6 chasse, via l'orifice d'écoulement 50, le premier fluide contenu dans le volume aval 54 qu'il définit dans la chambre d'alimentation 5, vers la canule d'alimentation 4. Cette situation se poursuit jusqu'à ce que l'orifice d'écoulement 50 se trouve, du fait du déplacement du plateau 62 du piston 6, dans le volume amont 53 défini par ce dernier au sein de ladite chambre d'alimentation 5. L'écoulement du premier fluide dans la canule d'alimentation 4 est alors stoppé, le volume intérieur de la canule d'alimentation 4 et celui du premier canal d'admission 2 restant toutefois remplis de premier fluide. Un deuxième fluide est alors admis, selon la direction illustrée par la flèche F2 sur les figures, dans le deuxième canal d'admission 3. Dans cette situation de fonctionnement, toutefois, la pression d'admission du deuxième fluide au sein du deuxième canal d'admission 3 est sensiblement supérieure à la pression du premier fluide dans le premier canal d'admission 2. Il en résulte une surpression du deuxième fluide par rapport au premier fluide. Les premier et deuxième canaux d'admission communiquant entre eux via la chambre commune de distribution 10, le deuxième fluide s'étendra donc préférentiellement, à la place du premier fluide, dans le premier canal d'admission 2, dans lequel il restera toutefois confiné grâce à la présence d'une première valve anti-retour 21 placée à l'amont dudit premier canal d'admission 2. Plus précisément, le deuxième fluide chassera, dans un premier temps, le premier fluide présent dans le premier canal d'admission 2, conduisant à une augmentation de la pression de distribution de ce dernier via l'orifice de distribution 11 de la buse de distribution 1 puis, dans un second temps, s'étendra dans ledit premier canal d'admission 2 ainsi que dans le deuxième canal d'admission 3 par lequel il est admis dans le dispositif selon l'invention.

Il est à noter que, dans cette situation de fonctionnement, un volume résiduel aval (non représenté sur les figures) demeure empli de premier fluide lorsque le piston 6 est dans une position telle que l'orifice d'écoulement 50 se trouve dans le volume amont 53 défini dans cette même chambre d'alimentation par la course dudit piston, stoppant ainsi l'écoulement dudit premier fluide dans la canule d'alimentation 4. Selon différents modes de réalisation, l'orifice d'écoulement 50 pourra être placé de telle manière que ce volume résiduel soit minimal (dans ce cas, l'orifice découlement 50 sera ménagé au plus près de la paroi d'extrémité aval 51 de la chambre d'alimentation 5) ou pourra être placé de telle manière que ledit volume résiduel constitue avantageusement une réserve "tampon" de premier fluide. Dans tous les cas, le dispositif d'alimentation en premier fluide (non représenté sur les figures) sera avantageusement équipé de moyens anti-retour afin d'éviter toute surpression de premier fluide au sein de la chambre d'alimentation 5 et de la canule d'alimentation 4 lors de l'admission en surpression du deuxième fluide.

Dans le cas où le deuxième fluide est, par exemple, constitué d'air comprimé, le dispositif selon l'invention permet, dans cette situation de fonctionnement, de réaliser un nettoyage des deux canaux d'admission, entre deux séquences de distribution du premier fluide, évitant ainsi tout encrassement, au cours du temps, de ces canaux d'admission.

Le dispositif selon l'invention permet alors de réaliser séquentiellement la distribution d'une quantité prédéfinie d'un premier fluide et d'une quantité prédéfinie d'un deuxième fluide.

Quelle que soit la situation de fonctionnement de l'invention, dans le premier mode de fonctionnement qui vient d'être décrit, c'est l'alimentation en premier fluide de la chambre d'alimentation 5 qui, par la course du piston 6 qu'elle engendre, conduit la buse de distribution 1 à se déplacer jusqu'à une position déployée d'où elle est apte à délivrer le fluide ou mélange de fluides que sa chambre commune de distribution 10 contient.

Dans un deuxième mode de fonctionnement, alternatif, le déplacement de la buse de distribution 1 en position déployée peut être gouverné par des moyens de commande appropriés, par exemple en fonction de situations de conduite particulières. Dans ce cas, le déplacement de la buse de distribution 1 en position déployée engendre, par l'intermédiaire de la glissière 8, un déplacement du piston 6 et de son plateau 62 vers l'amont de la chambre d'alimentation, qui génère à son tour une légère dépression au sein de la chambre d'alimentation 5, conduisant à l'aspiration d'une quantité prédéfinie, en fonction de la course imprimée au piston 6 par le déplacement de la buse de distribution 1, de premier fluide. Le fonctionnement du dispositif selon l'invention se produit alors de manière similaire au premier mode de fonctionnement exposé plus haut.

Dans tous les cas, le dispositif selon l'invention permet donc, selon différentes situations de fonctionnement, soit de distribuer un fluide ou un mélange de fluides pour le nettoyage de capteurs d'un véhicule automobile, soit de distribuer, de manière séquentielle prédéfinie, alternativement un premier ou un deuxième fluides, ou un mélange de ces deux fluides.

Le dispositif selon l'invention trouve donc une application particulièrement intéressante dans le domaine visé par l'invention, puisqu'il permet, dans une même séquence de fonctionnement, de réaliser à la fois un nettoyage et un séchage d'un capteur d'un système d'aide à la conduite. Une application préférée est de prévoir que le premier fluide soit du liquide de nettoyage, de sorte qu'il sort par la buse de distribution pour nettoyer une face du capteur, par exemple une lentille de caméra, alors que la buse a été amenée en position de travail, en regard de la lentille, par l'action de ce même liquide de nettoyage, et de prévoir que le deuxième fluide soit de l'air, que l'on vient injecter dans le dispositif après le passage du liquide de nettoyage dans la buse d'injection pour venir purger le liquide résiduel dans le dispositif, et éviter la possibilité de givre, et/ou pour venir sécher la lentille nettoyée.

L'invention s'étend donc avantageusement à un tel dispositif de nettoyage de capteurs dans un but d'aide à la conduite d'un véhicule automobile, dans la mesure où celui-ci comprend un dispositif de nettoyage tel qu'il vient d'être décrit et tel qu'il est illustré par les figures. Il est toutefois à noter que l'invention ne se limite pas aux modes et configurations décrits et illustrés par le présent document. A titre d'exemple, on pourra prévoir un dispositif de chauffage en amont du dispositif de nettoyage pour que les fluides acheminés et distribués sélectivement soient des fluides chauds pour faciliter le séchage ultérieur de la face nettoyée du capteur et éviter la formation de givre à l'intérieur du dispositif de nettoyage.

## Revendications

1. Dispositif de nettoyage d'un capteur d'un véhicule automobile comprenant des moyens de distribution simultanée ou séquentielle, par un orifice de distribution (11) agencé dans une buse de distribution (1), d'un premier fluide et d'un deuxième fluide, et comprenant également des moyens de déplacement de ladite buse de distribution (1) entre une position de repos et une position déployée, **caractérisé en ce que** le premier fluide et le deuxième fluide sont acheminés séparément, respectivement, par un premier canal d'admission (2) et par un deuxième canal d'admission (3) jusqu'à ladite buse de distribution (1), et **caractérisé en ce que** lesdits moyens de déplacement de la buse de distribution (1) comprennent des moyens communs avec les moyens d'alimentation en premier fluide du premier canal d'admission (2).

2. Dispositif selon la revendication 1, **caractérisé en ce que** lesdits moyens communs comportent au moins un piston (6) rendu mobile en déplacement par la pression exercée par le premier fluide et dont la tige (61) associée présente une extrémité reliée à la buse de distribution (1).

3. Dispositif selon la revendication précédente, **caractérisé en ce que** les moyens d'alimentation en premier fluide du premier canal d'admission (2) comprennent une chambre d'alimentation (5) dans laquelle est apte à coulisser de manière étanche ledit piston (6) dont une extrémité de ladite tige (61) est rendue solidaire d'une glissière (8) elle-même solidaire d'au moins la buse de distribution (1), de telle manière que tout déplacement de la glissière (8) engendré par un déplacement du piston (6) entraîne un déplacement de ladite buse de distribution.

4. Dispositif selon l'une des revendications précédentes, **caractérisé en ce que** les premier (2) et deuxième (3) canaux d'admission sont solidaires en déplacement de la buse de distribution (1), de telle manière que les moyens de déplacement de la buse entrainent en déplacement l'ensemble formé par le premier canal d'admission (2), le deuxième canal d'admission (3), et la buse de distribution (1).

5. Dispositif selon l'une des revendications précédentes, **caractérisé en ce qu'**il comporte deux entrées de fluide distinctes pour l'alimentation en premier fluide du premier canal d'admission (2) et l'alimentation en deuxième fluide du deuxième canal d'admission (3), l'alimentation en premier fluide du premier canal d'admission étant reliée à la chambre d'alimentation (5).

6. Dispositif selon la revendication précédente, **caractérisé en ce que** les moyens d'alimentation en premier fluide du premier canal d'admission (2) comprennent un embout d'alimentation (7) débouchant dans la chambre d'alimentation (5) et un orifice d'écoulement (50) ménagé dans une paroi de ladite chambre d'alimentation (5), par lequel le premier fluide peut s'écouler jusqu'au premier canal d'admission (2).

7. Dispositif selon la revendication précédente, **caractérisé en ce que** l'orifice d'écoulement (50) est placé de telle manière qu'il débouche alternativement dans un volume aval (54) de la chambre d'alimentation (5), dans lequel est admis le premier fluide par l'embout d'alimentation (7), ou dans un volume amont (53) de ladite chambre d'alimentation (5), exempt de premier fluide, en fonction de la position d'un plateau (62) du piston (6) lors du déplacement étanche dudit piston (6) au sein de ladite chambre d'alimentation (5).

8. Dispositif selon la revendication précédente, **caractérisé en ce que** la course du piston (6) et de la glissière (8) solidaire de ce dernier et de la buse de distribution (1) sont définies pour que la buse de distribution (1) soit dans sa position déployée lorsque l'orifice d'écoulement (50) débouche dans le volume aval (54) de la chambre d'alimentation (5) et pour que la buse de distribution (1) soit dans sa position de repos lorsque l'orifice d'écoulement (50) débouche dans le volume amont (53) de la chambre d'alimentation (5).

9. Dispositif selon l'une des revendications précédentes, **caractérisé en ce que** la buse de distribution (1) est mobile en translation.

10. Dispositif selon la revendication précédente, **caractérisé en ce que** la buse de distribution (1) est mobile en translation le long d'un axe parallèle à la direction d'allongement des premier (2) et deuxième (3) canaux de distribution.

11. Dispositif selon l'une des revendications précédentes, **caractérisé en ce que** le premier canal d'admission (2) et le deuxième canal d'admission (3) sont parallèles entre eux, et **en ce que** la buse de distribution (1) s'étend, dans le prolongement de ces premier et deuxième canaux d'admission (2, 3).

12. Dispositif selon l'une des revendications précédentes, **caractérisé en ce que** le premier canal d'admission (2) et le deuxième canal d'admission (3) communiquent entre eux par l'intermédiaire d'une chambre commune de distribution (10) dans laquelle ils débouchent respectivement.

13. Dispositif selon l'une des revendications précédentes, **caractérisé en ce que** le premier canal d'admission (2) et le deuxième canal d'admission (3) sont respectivement munis, à leur extrémité par laquelle, respectivement, les premier et deuxième fluides sont admis en leur sein, d'une première valve anti-retour (21) et d'une deuxième valve anti-retour (31).

14. Dispositif selon l'une des revendications précédentes, en combinaison avec au moins la revendication 2, **caractérisé en ce qu'**il comporte des moyens de rappel en position du piston (6).

## Patentansprüche

1. Vorrichtung zum Reinigen eines Sensors eines Kraftfahrzeugs, umfassend Mittel zum gleichzeitigen oder sequentiellen Verteilen eines ersten Fluids und eines zweiten Fluids durch eine Ausgabeöffnung (11), die in einer Ausgabedüse (1) angeordnet ist, und die ebenfalls Mittel zum Bewegen der Ausgabedüse (1) zwischen einer Ruheposition und einer ausgefahrenen Position aufweist, **dadurch gekennzeichnet, dass** das erste Fluid und das zweite Fluid jeweils getrennt durch einen ersten Einlasskanal (2) und durch einen zweiten Einlasskanal (3) bis zur Ausgabedüse (1) geleitet werden, und **dadurch gekennzeichnet, dass** die Mittel zum Bewegen der Ausgabedüse (1) Mittel aufweisen, die mit den Mitteln zum Zuführen des ersten Fluids in den ersten Einlasskanal (2) gemeinsam sind.

2. Vorrichtung nach Anspruch 1, **dadurch gekennzeichnet, dass** die gemeinsamen Mittel mindestens einen Kolben (6) aufweisen, der durch den Druck, der von dem ersten Fluid ausgeübt wird, in Bewegung beweglich gemacht wird und dessen zugehörige Stange (61) ein Ende aufweist, das mit der Ausgabedüse (1) verbunden ist.

3. Vorrichtung nach dem vorhergehenden Anspruch, **dadurch gekennzeichnet, dass** die Mittel zum Zuführen des ersten Fluids in den ersten Einlasskanal (2) eine Zufuhrkammer (5) aufweisen, in der der Kolben (6) geeignet ist, dichtend zu gleiten, wovon ein Ende der Stange (61) mit einer Schiene (8) fest verbunden ist, die selbst mit mindestens der Ausgabedüse (1) derart fest verbunden ist, dass jedes Bewegen der Schiene (8), das durch ein Bewegen des Kolbens (6) bewirkt wird, zu einem Bewegen der Ausgabedüse führt.

4. Vorrichtung nach einem der vorhergehenden Ansprüche, **dadurch gekennzeichnet, dass** der erste (2) und zweite Einlasskanal (3) mit der Ausgabedüse (1) derart bewegungsfest verbunden sind, dass die Mittel zum Bewegen der Ausgabedüse die Anordnung in Bewegung versetzen, die durch den ersten Einlasskanal (2), den zweiten Einlasskanal (3) und die Ausgabedüse (1) gebildet ist.

5. Vorrichtung nach einem der vorhergehenden Ansprüche, **dadurch gekennzeichnet, dass** sie zwei verschiedene Fluideinlässe zum Zuführen des ersten Fluids in den ersten Einlasskanal (2) und zum Zuführen des zweiten Fluids in den zweiten Einlasskanal (3) aufweist, wobei die Zuführung des ersten Fluids in den ersten Einlasskanal mit der Zufuhrkammer (5) verbunden ist.

6. Vorrichtung nach dem vorhergehenden Anspruch, **dadurch gekennzeichnet, dass** die Mittel zum Zuführen des ersten Fluids in den ersten Einlasskanal (2) einen Zuführstutzen (7), der in die Zufuhrkammer (5) mündet, und eine Abflussöffnung (50) aufweisen, die in einer Wand der Zufuhrkammer (5) ausgebildet ist, durch die das erste Fluid bis zum ersten Einlasskanal (2) ablaufen kann.

7. Vorrichtung nach dem vorhergehenden Anspruch, **dadurch gekennzeichnet, dass** die Abflussöffnung (50) derart angeordnet ist, dass sie abwechselnd in ein nachgelagertes Volumen (54) der Zufuhrkammer (5), in das das erste Fluid durch den Zuführstutzen (7) eingelassen wird, oder in ein vorgelagertes Volumen (53) der Zufuhrkammer (5), das frei von dem ersten Fluid ist, in Abhängigkeit von der Position einer Platte (62) des Kolbens (6) bei dem dichtenden Bewegen des Kolbens (6) in der Zufuhrkammer (5) mündet.

8. Vorrichtung nach dem vorhergehenden Anspruch, **dadurch gekennzeichnet, dass** der Hub des Kolbens (6) und der Lauf der Schiene (8), die mit diesem Letzteren und der Ausgabedüse (1) fest verbunden ist, definiert sind, damit die Ausgabedüse (1) in ihrer ausgefahrenen Position ist, wenn die Abflussöffnung (50) in das nachgelagerte Volumen (54) der Zufuhrkammer (5) mündet, und damit die Ausgabedüse (1) in ihrer Ruheposition ist, wenn die Abflussöffnung (50) in das vorgelagerte Volumen (53) der Zufuhrkammer (5) mündet.

9. Vorrichtung nach einem der vorhergehenden Ansprüche, **dadurch gekennzeichnet, dass** die Ausgabedüse (1) translatorisch beweglich ist.

10. Vorrichtung nach dem vorhergehenden Anspruch, **dadurch gekennzeichnet, dass** die Ausgabedüse (1) entlang einer Achse, die parallel zu der Erstreckungsrichtung des ersten (2) und zweiten (3) Ausgabekanals ist, translatorisch beweglich ist.

11. Vorrichtung nach einem der vorhergehenden Ansprüche, **dadurch gekennzeichnet, dass** der erste Einlasskanal (2) und der zweite Einlasskanal (3) parallel zueinander sind und dass sich die Ausgabedüse (1) in der Verlängerung dieses ersten und zweiten Einlasskanals (2, 3) erstreckt.

12. Vorrichtung nach einem der vorhergehenden Ansprüche, **dadurch gekennzeichnet, dass** der erste Einlasskanal (2) und der zweite Einlasskanal (3) durch eine gemeinsame Ausgabekammer (10) miteinander in Verbindung stehen, in die sie jeweils münden.

13. Vorrichtung nach einem der vorhergehenden Ansprüche, **dadurch gekennzeichnet, dass** der erste Einlasskanal (2) und der zweite Einlasskanal (3) jeweils an ihrem Ende, durch das jeweils das erste und zweite Fluid in ihr Inneres zugelassen werden, mit einem ersten Rückschlagventil (21) und einem zweiten Rückschlagventil (31) versehen sind.

14. Vorrichtung nach einem der vorhergehenden Ansprüche in Kombination mit mindestens dem Anspruch 2, **dadurch gekennzeichnet, dass** sie Positionsrückstellmittel des Kolbens (6) aufweist.

## Claims

1. Device for cleaning a sensor of a motor vehicle, including means for simultaneous or sequential distribution via a distribution orifice (11) in a distribution nozzle (1) of a first fluid and a second fluid and also including means for moving said distribution nozzle (1) between a rest position and a deployed position, **characterized in that** the first fluid and the second fluid are separately routed to said distribution nozzle (1) via a first admission channel (2) and via a second admission channel (3), respectively, **characterized in that** said means for moving the distribution nozzle (1) include means shared with the means for feeding the first admission channel (2) with the first fluid.

2. Device according to Claim 1, **characterised in that** said common means include at least one piston (6) rendered mobile by the pressure exerted by the first fluid and the associated piston rod (61) of which has an end connected to the distribution nozzle (1).

3. Device according to the preceding claim, **characterised in that** the means for feeding the first admission channel (2) with the first fluid include a feed chamber (5) in which said piston (6) is able to slide in a sealed manner with one end of said piston rod (61) fastened to a slider (8) itself fastened to at least the distribution nozzle (1) so that any movement of the slider (8) generated by movement of the piston (6) drives movement of said distribution nozzle.

4. Device according to any one of the preceding claims, **characterised in that** the first admission channel (2) and the second admission channel (3) are constrained to move with the distribution nozzle (1) so that the means for moving the nozzle drive movement of the assembly formed by the first admission channel (2), the second admission channel (3) and the distribution nozzle (1).

5. Device according to any one of the preceding claims, **characterised in that** it includes two distinct fluid inlets for feeding the first admission channel (2) with the first fluid and for feeding the second admission channel (3) with the second fluid, the inlet feeding the first admission channel with the first fluid being connected to the feed chamber (5).

6. Device according to the preceding claim, **characterised in that** the means for feeding the first admission channel (2) with the first fluid include a feed tip (7) leading into the feed chamber (5) and a flow orifice (50) in a wall of said feed chamber (5) through which the first fluid can flow into the first admission channel (2).

7. Device according to the preceding claim, **characterised in that** the flow orifice (50) is positioned so that it leads alternately into a downstream volume (54) of the feed chamber (5) into which the first fluid is admitted via the feed tip (7) or into an upstream volume (53) of said feed chamber (5) free of the first fluid as a function of the position of a plate (62) of the piston (6) during the sealed movement of said piston (6) inside said feed chamber (5).

8. Device according to the preceding claim, **characterised in that** the stroke of the piston (6) and of the slider (8) fastened thereto and of the distribution nozzle (1) are defined so that the distribution nozzle (1) is in its deployed position when the flow orifice (50) leads into the downstream volume (54) of the feed chamber (5) and so that the distribution nozzle (1) is in its rest position when the flow orifice (50) leads into the upstream volume (53) of the feed chamber (5).

9. Device according to any one of the preceding claims, **characterised in that** the distribution nozzle (1) is mobile in translation.

10. Device according to the preceding claim, **characterised in that** the distribution nozzle (1) is mobile in translation along an axis parallel to the lengthwise direction of the first distribution channel (2) and the second distribution channel (3).

11. Device according to any one of the preceding claims, **characterised in that** the first admission channel (2) and the second admission channel (3) are parallel to each other and **in that** the distribution nozzle (1) is in line with the first and second admission channels (2, 3).

12. Device according to any one of the preceding claims, **characterised in that** the first admission channel (2) and the second admission channel (3) communicate with each other via a common distribution chamber (10) to which they lead.

13. Device according to any one of the preceding claims, **characterised in that** the first admission channel (2) and the second admission channel (3) are respectively provided at their end through which the first and second fluids respectively are admitted into them with a first non-return valve (21) and a second non-return valve (31).

14. Device according to any one of the preceding claims, in combination with at least Claim 2, **characterised in that** it includes position return means for the piston (6).
